# EUROPÄISCHE PATENTANMELDUNG

(11) **EP 1 338 934 A1**
(43) Veröffentlichungstag der Anmeldung: **27.08.2003**
(21) Anmeldenummer: 03001743.8
(22) Anmeldetag: 28.01.2003
(51) Int. Cl.: G05B 19/042, A01B 69/00

(54) **Verfahren zur Steuerung eines landwirtschaftlichen Traktors mit Arbeitsgerät**

(30) Priorität: 26.02.2002 DE 10207995
(71) Anmelder: CLAAS Saulgau GmbH, 88348 Bad Saulgau (DE)
(72) Erfinder: Betz, Peter, 88741 Baustetten (DE); Ober, Martin, 78336 Epfendorf (DE)

(57) **Zusammenfassung**

Verfahren zur Steuerung mobiler landwirtschaftlicher Arbeitsmaschinen (47), welche aus einer Kombination eines Trägerfahrzeug (1) und mindestens einem Arbeitsgerät (2) als Teil einer auswechselbaren Ausrüstung besteht und das Trägerfahrzeug (1) zumindest ein als Jobrechner (4,44,44',44") ausgebildetes Steuerungselement und ein Terminal (5) zur Prozessbeobachtung und zur Prozesssteuerung aufnimmt, und das Trägerfahrzeug 1 mindestens ein Kopplungselement (3) zur Ankopplung einer auswechselbaren Ausrüstung als Arbeitsgerät (2) aufweist, wobei dass die Steuerung des Arbeitsprozesses der Arbeitsmaschine (47) wenigstens teilweise mikroprozessorgesteuert von einem Jobrechner (9) des angekoppelten Arbeitsgerätes (2) erfolgt.

## Beschreibung

Die Erfindung betrifft ein Verfahren zur Steuerung landwirtschaftlich Arbeitsmaschinen mit auswechselbaren Ausrüstungen.

Auswechselbaren Arbeitsgeräte in diesem Sinne werden mit Trägerfahrzeuge gekoppelt und bilden mit diesen gemeinsam Arbeitsmaschinen der erfindungsgemäßen Gattung gemäß dem Hauptanspruch.

Derartige Trägerfahrzeuge können beispielsweise Traktoren oder spezialisierte selbstfahrende Arbeitsmaschinen sein. Die Arbeitsgeräte können beispielsweise Vorsatzgeräte, Anbaugeräte, gezogene oder aufgesattelte Geräte sein. Es handelt sich dabei insbesondere um Arbeitsgeräte für die Landtechnik oder beispielsweise auch für den kommunalen Bereich der Landschaftspflege.

Allen Arbeitsmaschinen der erfindungsgemäßen Gattung gemeinsam ist, dass sie auswechselbare Ausrüstungen - nachfolgend als Arbeitsgeräte bezeichnet-beinhalten, die mit einem Trägerfahrzeuge gemeinsam einen Arbeitsprozess definieren. Ohne ein geeignetes Trägerfahrzeug sind derartige Arbeitsgeräte nicht in der Lage, den ihnen zugedachten Arbeitsprozess aufzunehmen. Der Verbrennungsmotor des Trägerfahrzeugs stellt somit die ursächliche Energiequelle für den vorgesehenen Arbeitsprozess dar.

Es handelt sich dabei in aller Regel um mobile Arbeitsmaschinen, wobei das Trägerfahrzeug dann gleichzeitig auch die Funktion des Transports zum Einsatzort übernimmt und während des Arbeitsprozesses die Funktion des Antriebs des Arbeitsgerätes insgesamt.

Des weiteren verfügen derartige Trägerfahrzeuge über Abtriebselemente zur Übertragung von Antriebsdrehmomenten, beispielsweise über Zapfwellenabtriebsstränge oder Treibmittelscheiben, über Bordhydraulik-, Bordelektrik-, und Bordpneumatiksysteme und über mikroprozessorgestützte Steuerungs- und Regeleinrichtungen.

Derartige mikroprozessorgestützte Steuerungs- und Regeleinrichtungen beinhalten ein Steuerungsprogramm, welches in geeigneten Datenspeichern dem Mikroprozessor ab- und aufrufbar zur Verfügung steht. Derartige Steuerungstechnische Einheiten werden auch als Jobrechner bezeichnet. Des weitern ist zur Steuerung derartiger Systeme ein Bedienterminal am Arbeitplatz des Operators erforderlich, mit dem Überwachungs- und steuerungstechnische Eingriffsfunktionen verbunden sind. Des weiteren sind dem Jobrechner Sensoren und Aktoren zugeordnet, die für die Durchführung des eigentlichen Steuerung- und Regelprozesses unbedingt erforderlich sind.

In der modernen und leistungsfähige Steuerungstechnik im vorgenannten Sinne sind die peripheren Einheiten um den Jobrechner mittels Bus-Systemen untereinander verbunden. Diese können z.b. LBS- oder ISO-bus-gesteuerte Bussysteme sein.

Somit können die Arbeitsgeräte über geeignete Schnittstellen eines derartigen Bus-Systems ebenfalls mit dem Bordrechner eines Trägerfahrzeugs gekoppelt werden, wobei der Arbeitsgeräte ihrerseits mit eigenen Jobrechnern bestückt sein können, die dann mit dem Jobrechner des Trägerfahrzeugs korrespondieren, wobei aber der Jobrechner des Trägerfahrzeugs die übergeordnete Leitfunktion übernimmt.

Die Art der Energieumsetzung als Teil des Arbeitsprozesses, mechanisch, hydraulisch, pneumatisch oder elektrisch, ist abhängig vom Arbeitsprozess, der Verfahrenstechnik, dem Verfahrensablauf und von den konstruktiven Ausprägungen des Arbeitsgerätes. Dadurch wird auch der Steuerungsprozess prinzipiell vorgegeben.

Erst die Kopplung des Trägerfahrzeugs mit dem Arbeitsgerät und dessen steuerungstechnischen Einheiten ergibt somit ganzheitlich gesehen eine autarke Maschine im ursächlichen Sinn.

Die Software zur Steuerung des Arbeitsgerätes wird dabei in den Arbeitsspeicher eines Bordrechners eingelesen. Wird ein Anbaugerät gewechselt, so muss auch die entsprechende Software gewechselt und neu eingelesen werden. Ist dabei der Datenträger beschädigt oder steht er momentan gar nicht zur Verfügung, so kann die Steuerungssoftware nicht eingelesen werden, so dass das Gerät möglicherweise bis zur Wiederbeschaffung der Software nicht eingesetzt werden kann. Des weiteren ergeben sich Einschränkungen hinsichtlich der Gestaltung des Steuerungsprozesses in bezug auf die bordseitig zur Verfügung stehenden Hardware, welches u.u. verschiedenartige Software für verschiedene Trägerfahrzeugtypen erforderlich macht. Auch gibt die Speicherkapazität und die interne Auslegung des Steuerungssystems des Bordrechners und dessen periphere Umgebung dem geplanten Steuerungs- und Regelprozess grenzen vor, die oftmals starke Einschränkungen für den geplanten Steuerungs- und Regelprozess beinhalten.

Diesen Mangel will die Erfindung überwinden, indem die gesamte prozessorientierte Steuerungssoftware primär einem dem Arbeitsgerät zugeordneten Bordrechner und dessen Arbeitsspeicher zugeordnet ist, und der zugleich Leitrechner für den gesamten Arbeitsprozess der Arbeitsmaschine bestehend aus Trägerfahrzeug und Arbeitsgerät ist.
wobei der Bordrechner des Gerätes mit dem Bordrechner des Trägerfahrzeugs über ein Bridgeterminal, welches dem Trägerfahrzeug zugeordnet ist, in Wirkverbindung steht. Dabei übernimmt der Bordrechner des Arbeitsgerätes die übergeordnete Leitfunktion innerhalb des Steuerungsprozesses für die gekoppelte Funktion Trägerfahrzeug - Arbeitsgerät.

Aufgabe der Erfindung ist es somit, ein arbeitsgerätspezifisches steuerungsund regeltechnisches, vom Arbeitsgerät als auswechselbare Ausrüstung ausgehendes Verfahren als steuerungstechnisches Managementsystem für die Gesamtheit einer Arbeitsmaschine nach der Erfindung zu gestalten.

Gelöst wird die Aufgabe mit den Merkmalen des Hauptanspruchs 1 der Erfindung. Weitere vorteilhafte Ausgestaltungen der Erfindung sind den Unteransprüchen, der Beschreibung und der Figurendarstellungen zu entnehmen.

Der besondere Vorteil der Erfindung besteht somit darin, dass derartige Arbeitsgeräte als auswechselbare Ausrüstungen ausgestattet mit einem Job-Rechner nach der Erfindung, koppelbar mit einem Trägerfahrzeug durch eine externe bidirektionale LBS- oder ISO-Bus-Verbindung in Verbindung mit einem Schlepperterminal mit Bridge-Funktionalität, nach dem Ankoppeln des Arbeitsgerätes an das Trägerfahrzeug direkt ohne Programmübertragung durch einen externen Datenträger funktionsfähig ist. Dieses beinhaltet auch die Möglichkeit der Übertagung von Teilprogrammen als Teilsoftware von Datenspeichern des Jobrechners eines Arbeitsgerätes in einen Speicher des Jobrechners des Trägerfahrzeugs

In besonders vorteilhafter Aufgestaltung kann dabei der Jobrechner des Arbeitsgerätes das Steuerungskonzept direkt auf Energiequellen und Steuerungselemente des Trägerfahrzeugs zugreifen, wobei insbesondere auch sicherheitsrelevante und kritische Arbeitszustände in diesem Zusammenhang überwacht werden und vorbeugend unterbunden werden können. Grundlage dieses Konzeptes ist ein umfassendes, leistungsfähiges und arbeitsgerätespezifisches steuerungstechnisches Managementsystems, welches ganzheitlich das Trägerfahrzeug mit einbezieht.

Insbesondere auch in Verbindung mit der Sensorik des Arbeitsgerätes können Plausibilitätsprüfungen, sicherheitsrelevante Betriebszustände abgefragt und Sicherheitsprüfungen permanent durchgeführt werden, so dass kritische Betriebszustände des Arbeitsgerätes in Verbindung mit dem Trägerfahrzeug rechtzeitig erkannt und vorbeugend abgewendet werden können, indem die Steuerung selbsttätig eingreift. Derartige Prozesszustande können entstehen durch Überlastung der Antriebsstränge oder durch Überhitzung von Hydrauliksystemen oder gar durch kritische Fahrzustände am Hang oder in Kurvenfahrten, oder beispielsweise auch durch Fehlbedienungen des Operators durch manuellen Eingriff in das Steuerungssystem.

Das steuerungstechnische Management nach der Erfindung trägt somit zur Verbesserung der Arbeitssicherheit insgesamt, aber gleichermaßen auch zur Verbesserung der Wirtschaftlichkeit derartiger Arbeitsmaschinen bei, da dadurch Ausfallzeiten und Reparaturkosten minimiert werden können.

Komplexere Systeme können beispielsweise auch Regelkreise verlangen, wenn sie prozesssicher und unabhängig von dem Operator arbeiten sollen. Dieses bedeutet, dass Eingangs- und Ausgangssignale in entsprechenden Regelstrecken miteinander verglichen werden und dass Ausgangssignale durch Rückführung wieder zu Eingangssignalen werden.

Das Ergebnis kann auch sein, dass dieses automatische Eingriffe währen des Arbeitsprozesses in das Trägerfahrzeugmanagement erforderlich macht. Dieses kann beispielsweise bedeuten, dass Fahrgeschwindigkeiten dem Arbeitsprozess automatisch angepasst werden, um eine drohende Überhitzung der Bordhydraulik des Trägerfahrzeugs abzuwenden ohne das dieses zu längeren Stillstandszeiten in der Abkühlphase kommt.

Dieses kann insbesondere dann von besonderem Vorteil sein, wenn die Energiequelle für das Hydrauliksystem des Arbeitsgerätes gleichzeitig von der Bordhydraulik des Trägerfahrzeugs gestellt wird. Faktisch bedeutet dieses, das in einer derartigen Situation die Leistungsstufe des Arbeitsprozess auf eine geringere Leistungsniveau automatisch heruntergeregelt wird um einen derartigen Kritischen Betriebszustand zu vermeiden. Bei automatischen mikroprozessorgesteuerten Fahrgetrieben kann dieses beispielsweise bedeuten, das der für diese Komponente des Trägerfahrzeugs zuständige Jobrechner indirekt gesteuert wird vom Jobrechner des Arbeitsgerätes, den Ausgabebefehl erstellt, die Fahrgeschwindigkeit abzusenken um diese auf ein neues Niveau einzuregeln.

Vor diesem Hintergrund sind auch Mischkombinationen von Steuerungsprozessen in Verbindung mit verschiedenen Energiekreisläufen möglich. Dieses gilt auch für Steuerungskreisläufe, mit denen Stellorgane oder Antriebsorgane geregelt werden.

Die primäre Schnittstelle zwischen Bordrechner des Arbeitsgerätes und Bordrechner des Trägerfahrzeugs ist der externe und bidirektional arbeitende LBS oder ISO-Bus. Dieses ermöglicht Rückkopplungseffekte zwischen dem Jobrechner des Tragerfahrzeugs und dem Jobrechner des Arbeitsgerätes, die bei diesem Steuerungskonzept von besonderer Bedeutung zur Verbesserung der Regelgüte der Regelstrecke des Gesamtsystems Trägerfahrzeug-Arbeitsgerät sind. Trägerfahrzeuge modernerer Gattungen nutzen für die Ausgestaltung des Fahrzeugsmanagements weitere dem Hauptrechner nebenoder untergeordnete Jobrechner, beispielsweise zur Regelung der Lenk-, Geschwindigkeits- Navigations- Getriebe- bzw. Antriebsenergieverteilungsoder Bremssysteme. Gerade die Eingangs oder Ausgangssignale derartige Jobrechner können bedeutsame Signale für Prozessführungsgrößen darstellen, die dann als Eingangssignale für den Jobrechner des Arbeitsgerätes genutzt werden können.

Je nach Ausstattung des Trägerfahrzeugs mit Steuerungselementen und Schnittstellen zwischen Trägerfahrzeug und Arbeitsgerät ist es dabei durchaus möglich, dass der Jobrechter des Arbeitsgeräts als Leitrechner in diesem Steuerungskonzept direkt auf die Steuerungselemente des Trägerfahrzeugs zugreift, das heißt Stelleingriffe vornimmt.

Beispielsweise ist es möglich direkt auf die elektromagnetischen Ventile des Trägherfahrzeugs durchzugreifen um diese zur Steuerung von hydraulischen Arbeits- und Steuerkreisläufen des Arbeitsgerätes zu nutzen.

Des weiteren ist auch eine Kombination beispielsweise der Art denkbar, dass ein Teil der Steuerungsventile oder Steuerungselemente trägerfahrzeugseitig und ein anderer Teil der Steuerungsventile oder Steuerungselemente arbeitsgeräteseitig zugeordnet ist, wobei diese allesamt vom Job-Rechner des Trägerfahrzeugs als Leitrechner des Arbeitsprozesses angesteuert werden.

Insbesondere in Zusammenhang mit Load-Sensing-Hydrauliksysteme können dabei optimale Betriebszustände durch prozessangepasste Drücke und Förderströme erzielt werden. Gerade und insbesondere die hohe spezifische Leistungsdichte von Hydraulikanlagen bei minimalen Bauräumen liefern erhebliche Vorteil bei komplexen und großflächig arbeitenden landwirtschaftlichen Geräten, die zu erheblichen Gewichtseinsparungen führen, und die somit mit erheblichen wirtschaftlichen Vorteilen verbunden sind,

Dadurch werden insbesondere unnötige Leistungsverluste durch Wärmeabstrahlung vermieden.

Diese Vorteile gilt es insbesondere dann zu nutzen, wenn ohnehin trägerfahrzeugseitig Load-Sensing-Pumpen mit hoher Leistung zur Verfügung stehen, wobei gerade dann die Vorteile dieses erfindungsgemäßen Steuerungskonzeptes optimal greifen und diese Pumpen prozessgesteuert vom Arbeitsgerät direkt gesteuert werden.

Dabei können dann entweder wahlweise die Steuerungsventile auf dem Trägerfahrzeug oder auf dem Arbeitsgerät oder in einer Kombination von beidem angeordnet sein. Steuerungstechnisch gesehen ist dieses bei dem erfindungsgemäßen Steuerungskonzept von untergeordneter Bedeutung.

In der nachfolgenden Figurenbeschreibung wird exemplarisch und aus gründen der besseren Lesbarkeit ein derartiges Steuerungskonzept an einem einfachen Beispiel dargelegt:

### Bezugszeichenliste:

- 1: Gerätegrenze -Trägerfahrzeug 47 Arbeitsmaschine
- 2: Gerätegrenze - Arbeitsgerät
- 3: Kopplungselemente
- 4: Job-Rechner - Trägerfahrzeug
- 5: Terminal - Trägerfahrzeug
- 6: Interner Bus - Trägerfahrzeug
- 7: Eingänge - Job-Rechner - Trägerfahrzeug
- 8: Ausgänge- Job-Rechner - Trägerfahrzeug
- 9: Jobb-Rechner - Arbeitsgerät
- 10: Eingänge - Job-Rechner - Arbeitsgerät
- 11: Ausgänge - Job-Rechner Arbeitsgerät
- 12: externer bidirektionaler LBS oder ISO-BUS
- 13,13',13": Sensoren - Arbeitsgerät
- 14: Hydraulikmotor
- 15: Stellzylinder
- 16: Arbeitszylinder
- 17: Wegeventil
- 18: Wegeventil
- 19: Wegeventil
- 20: Elektrische Verbindungsleitung
- 21: Hydraulikleitung
- 22: Hydraulikleitung
- 23: Hydraulikleitung
- 24: flexible Hydraulikleitung
- 25: Zwillings-Drossel-Rückschlagventil
- 26: Verkettungs-Reihenplatte
- 27: Load-Sensing-Pumpe
- 28: Verbrennungsmotor
- 29: Kupplung
- 30: Drehzahlsensor
- 31: Öltank
- 32: Drucksensor
- 33: Förderstromsensor
- 34: Schwenkwinkelsensor
- 35: Drehzahlsensor
- 36: Schnittstelle hydraulischer Ausgang
- 37: Saugleitung
- 38: Rücklaufleitung
- 39: Leckölleitung
- 40: Steuerleitung
- 41: Schwenkwinkel -Stellantrieb
- 42: Steuerventil
- 43: Druckleitung
- 44: unter oder nebengeordnete Bordrechner
- 45: RAM-Speicher-Arbeitsgerät
- 46: Drehmomentsensor

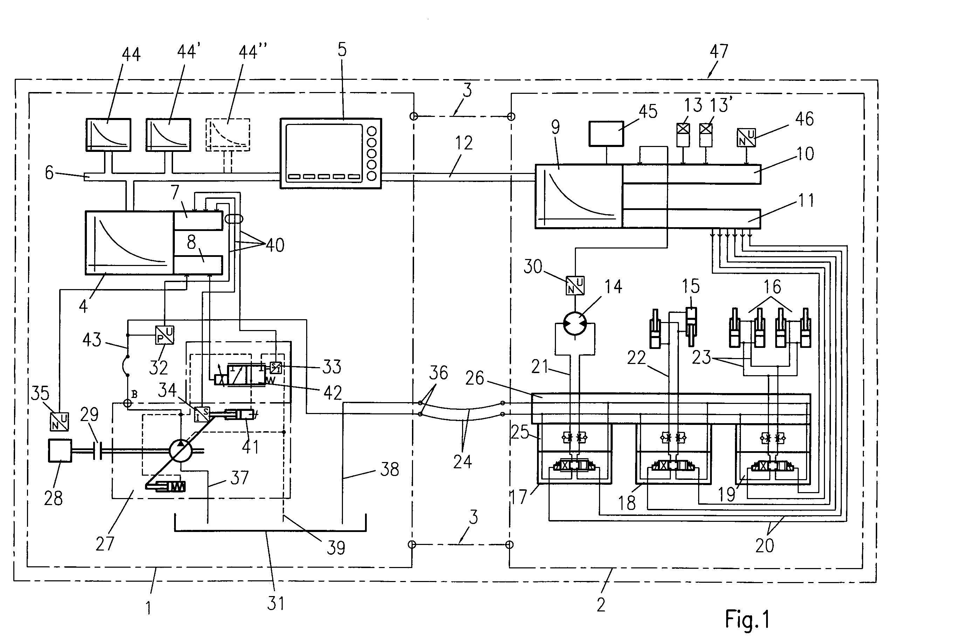

Figur 1 zeigt in schematisch vereinfachter symbolischer Darstellung den prinzipiellen Aufbau der Kombination eines Trägerfahrzeugs mir einem in seiner Funktion nicht näher definiertem Arbeitsgerät 2, wobei Trägerfahrzeug 1 und Arbeitsgerät 2 gemeinsam eine Arbeitsmaschine 47 als funktionale Einheit bilden. Dabei wird das erfinderische grundlegende Zusammenwirken der Bordrechnersysteme, bestehend aus den Jobrechnern 4, 44, 44', 44" des Trägerfahrzeugs 1 und das des Arbeitsgerätes 2 bestehend aus dem Jobrechner 9 gleichermaßen nach den Regeln der Technik symbolisch dargestellt. Die vereinfachte und Darstellung dient dabei lediglich der besseren Übersicht und sie beschränkt sich dabei auf erfinderisch wesentliche Gedankenführung. Dabei ist es dem Wesen nach völlig unerheblich, um welches auswechselbare Arbeitsgerät 2 es sich dabei handelt.

Die physikalische Grenzen als Gerätegrenze des Trägerfahrzeugs 1 ist als Umrandung strichpunktiert dargestellt. Analog gilt dieses für die physikalische Grenze als Gerätegrenze des Arbeitsgerätes 2. Trägerfährzeug 1 und Arbeitsgerät 2 sind durch geeignete Kopplungselemente 3, beispielsweise durch die der Dreipunkthydraulik, miteinander gekoppelt.

Sämtliche Antriebs und Steuerungselemente, die an dem Steuerungsprozess teilnehmen, sowohl die des Trägerfahrzeugs 1 als auch die des Arbeitsgerätes 2, sind physikalisch innerhalb der Gerätegrenzen des Trägerfahrzeugs 1 bez. innerhalb der Gerätegrenzen des Arbeitsgerätes 2 an diese gebunden. Die einzigen Antriebs- und steuerungstechnischen Verbindungen beider physikalischer Einheiten bestehen antriebstechnisch durch die flexiblen Hydraulikleitungen 24 und steuerungstechnisch aus dem externen bidirektionalen LBS- oder ISO-Bus 12. Die Kupplungselemente 3, die flexiblen Hydraulikleitungen 24 und der externen bidirektionalen LBS- oder ISO-Bus 12 stellen somit in diesem Ausführungsbeispiel die Schnittstelle zwischen Trägerfahrzeug und Arbeitsgerät dar. Die hydraulische Schnittstelle 36 am Trägerfahrzeug 1 kann beispielsweise in allgemein bekannter Weise als Kupplungsmuffe mit Steckerverbindung ausgeführt sein. Die Schnittstelle des LBS/ISO-Bus am Trägerfahrzeug 1 kann in allgemein bekannter Weise als LBS-Steckdosenverbindung ausgeführt sein.

Das Trägerfahrzeug verfügt über einen Job-Rechner 4 und ein Terminal 5, welches Bridge-Funktionalität besitzt. Des weiteren kann das Trägerfahrzeug über weitere unter oder nebengeordnete Job-Rechner 44, 44', 44", usw. verfügen. Alle Job-Rechner 4, 44, 44', 44" und das Terminal 5 des Trägerfahrzeugs sind über den internen Bus 6 des Trägerfahrzeugs steuerungstechnisch untereinander verbunden. Der Job-Rechner 4 verfügt über die Eingänge 7 und die Ausgänge 8.

Die Eingänge 7 des Job-Rechners 4 sind interne Eingänge des Trägerfahrzeugs. Externe Eingänge seitens des Arbeitsgerätes erfolgen über den LBS/ISO-Bus 12, welcher die Verbindung zwischen dem Terminal 5 und dem Job-Rechner 9 des Arbeitsgerätes darstellt.

Des weiteren verfügt das Trägerfahrzeug über einen Verbrennungsmotor 28, der mittels einer Kupplung 29 mit einer Hydraulikpumpe, ausgebildet als druckund förderstromgeregelte Load-Sensing-Pumpe 27 gekoppelt ist.

Die Hydraulikpumpe ist mit einer Saugleitung 37 mit dem Öltank 31 verbunden, des weiteren verfügt die Pumpe über eine Leckölleitung 39, welche die internen Leckölströme in den Tank zurückführt. Des weiteren verfügt die Load-Sensing-Pumpe über einen Regelmechanismus, der im wesentlichen aus dem Steuerventil 42, ausgeführt als Proportionalwegeventil, einem Schwenkwinkel-Stellantrieb 41, einem Drucksensor 32, einem Förderstromsensor 33 und einem Schwenkwinkelsensor 34 besteht. Diese Sensoren 32, 33, 34 sind über Steuerleitungen 40 mit dem Eingang 7 des Bordrechners 4 verbunden. Andererseits ist der Ausgang des Bordrechners 4 mittels einer Steuerleitung 40 mit dem Steuerventil 42 als Stellglied für den Schwenkwinkel-Stellantrieb 41 der Load-Sensing-Pumpe verbunden.

Somit kann der Arbeitsdruck in der Druckleitung 43 mit dem Sensor 32, das Fördervolumen des Ölstroms mit dem Sensor 34 durch die Messung des Schwenkwinkels der Load-Sensing-Pumpe ermittelt werden. Die sensorisch erfassten Werte werden liegen als Eingangssignale am Jobrechner 4 an.

Das Arbeitsgerät 2 in dem dargestellten Ausführungsbeispiel verfügt über hydraulische Antriebs- und Stellelemente, und zwar über einen Hydraulikmotor 14, über zwei Stellzylinder 15 und über vier Arbeitszylinder 16. Diese werden betätig durch gesteuerte Wegeventile 16, 17 und 18, wobei diese mit Zwillings-Drossel-Rückschlagventilen 25 in Form einer Längsverkettung auf einer Verkettungsreihenplatte 26 mit dem Hydraulikkreislauf der Bordhydraulik in Wirkverbindung stehen. Dabei sind die hydraulischen Antriebselemente Hydraulikmotor 14, Stellzylinder 15, Arbeitszylinder 16 mittels Hydraulikleitungen 21, 22, 23 mit der Verkettungs-Reihenplatte 26 verbunden. Das Wegeventil 16 ist dabei als Proportionalwegeventil ausgebildet, so dass die Drehzahl des Hydraulikmotors 14 das Wegeventil 16 gesteuert werden kann. Die momentane Drehzahl des Hydraulikmotors wird mittels eines Drehzahlsensors 30 erfasst, wobei das Ausgangssignal des Drehzahlsensors 30 dem Eingang des Job-Rechners 9 des Arbeitsgerätes 2 zugeführt wird.

Das Programm zur Steuerung des Arbeitsprozesses ist in dem Speicher 45 des Arbeitsgerätes 2 dem Bordrechner 9 zugeordnet. Dem Eingang 10 des Bordrechners 9 können weitere Eingangssignale, die an dessen Eingang 10 anliegen, zugeführt sein. Derartige Eingangssignale können sensorisch erzeugt werden, beispielsweise durch Sensoren, die als Näherungsiniatoren 13, 13' oder als Drehmomenterfassungssensor 46. Die Initiatoren 13,13' können beispielsweise Verriegelungseinrichtungen für Schutzverkleidungen oder Endlagen an Stellantrieben abfragen. Der Drehmomenterfassungssensor 46 kann beispielsweise das Drehzahl an den rotierenden von dem Hydraulikmotor 14 angetriebenen Arbeitswerkzeugen ermitteln und damit eine Aussage über die momentan abgegebene Leistung an der Abtriebswelle des Hydraulikmotors treffen.

Die Initiatoren liefern somit Eingangsignale für den Bordrechner 9 des Arbeitsgerätes 2, die der Arbeitssicherheit dienen, und programmatisch so mit dem Arbeitsprozess verknüpft sind, das bei geöffneten Sicherheitsverkleidungen sämtliche Antriebselemente außer Funktion gesetzt werden.

Andererseits können die nebengeordneten Bordrechner für 44,44',44", die Teil des steuerungstechnischen Trägerfahrzeugmanagements sind, über den Bordrechner, den internen BUS 6 des Trägerfahrzeugs und weiterhin über das Terminal 5 und den LBS/ISO-BUS 12 Eingangssignale für den Bordrechner 9 des Arbeitsgerätes liefern.

Diese können beispielsweise Signale sein, die Aussagen über die momentane Fahrgeschwindigkeit liefern, oder über den Einschlagwinkel der gelenkten Räder in Kurvenfahrten, welches eine Aussage über einen sich anbahnenden kritischen Betriebszustand für den Arbeitsprozess liefert.

Dieser kritische Zustand wiederum kann verhindert werden, wenn der Jobrechner 9 des Arbeitsgerätes 2 - und nur dieser kennt den besagten sich ankündigenden kritischen Zustand - über die Leitfunktion des gesamten Prozesssteuerungsprozess verfügt und nunmehr dem Bordrechner 5 die Anweisung erteilt, die Geschwindigkeit des Trägerfahrzeugs soweit zu reduzieren, das dieser vermieden wird.

Analog ist eine Situation derart vorstellbar, das der Energieumsatz der rotierenden Arbeitswerkzeuge über einen andauernden Zeitraum zu hoch ist, so das eine andauernde übermäßiger Belastung der Antriebstränge ansteht und eine übermäßige Temperaturerhöhung, die zur Überhitzung des Hydrauliksystems führen kann, ansteht.

Auch in diesem Fall kann das Eingangssignal des Drehmomentsensors 46 dem Jobrechner einen zu erwartenden kritischen Betriebszustand ankündigen, auf den der Jobrechner so reagieren kann, das er dem Jobrechner mitteilt, die Fahrgeschwindigkeit auf einen angemessenen Wert zu reduzieren, um dadurch die Leistung im Antriebsstrang der rotierenden Arbeitswerkzeuge d.h. an der Abtriebswelle des Hydraulikmotors 14 zu senken.

Auch können beispielsweise rückgeführte Ausgangssignale des Bordrechners 5 auf den Eingang des Bordrechners 9 als zur Bildung von Regelgrößen genutzt werden. Auf dieser Basis könnte beispielsweise die Last an der Abtriebswelle des Hydraulikmotors konstant gehalten werden, indem nunmehr die Geschwindigkeit des Trägerfahrzeugs als Regelgröße genutzt wird, um einem möglichst konstanten und optimalen Energieumsatz an den Arbeitswerkzeugen zu erhalten. Dieses würde beispielsweise einen Beitrag liefern, den Arbeitsprozess in einem besonders wirtschaftlich optimalen Bereich zu halten.

Erfindungswesentlich ist dabei, dass der Bordrechner 9 als Leitrechner die Leitfunktion des Steuerungs- und Regelprozesses für den Arbeitsprozesses insgesamt zugeordnet ist und ihm damit das Prozesssteuerungsprogramm innerhalb der physikalischen Grenzen des Arbeitsgerätes direkt zugeordnet und auf diesem in einem Speicher 45 abrufbar abgespeichert ist. Dabei ist der Bordrechner 9 über einen LBS/- oder ISO-BUS 12 mit einem Terminal 5 mit Bridge-Funktionalität des Trägerfahrzeugs verbunden.

Dabei ist anzumerken, dass auch ein Jobrechner die Bridge-Funktionalität haben kann und diese nicht notwendigerweise Bestandteil des Terminals sein muss.

Dabei übernimmt die Bridge-Funktion des Terminal 5 eine Interpreterfunktion, d. h. die LBS-Signale werden interpretiert und dem Job-Rechner 4 des Trägerfahrzeugs als Eingangssignale zugeführt und umgekehrt werden die Ausgangssignale des Bordrechners 9 genutzt um dieses als Eingangssignale des Bordrechners 9 des Arbeitsgerätes für das Steuerungsmanagement der gesamten Prozessteuerung zu nutzen.

Dabei übernimmt das Terminal 5 weitere wichtige Funktionen, die es dem Operator als Fahrer des Trägerfahrzeugs erlauben, den Betriebszustand zu überwachen und in diesen - falls nötig manuell ausgelöst - direkt eingreifen zu können, ohne wichtige Sicherheitsfunktionen dabei außer Funktion zu setzen.

Die Abbildung des Prozessablaufs geht ebenfalls softwaremäßig ursächlich vom Jobrechner 9 des Trägerfahrzeugs aus.

## Patentansprüche

1. Verfahren zur Steuerung mobiler landwirtschaftlicher Arbeitsmaschinen (47), welche aus einer Kombination eines Trägerfahrzeug (1) und mindestens einem Arbeitsgerät (2) als Teil einer auswechselbaren Ausrüstung besteht und das Trägerfahrzeug (1) zumindest ein als Jobrechner (4,44,44',44") ausgebildetes Steuerungselement und ein Terminal (5) zur Prozessbeobachtung und zur Prozesssteuerung aufnimmt, und das Trägerfahrzeug 1 mindestens ein Kopplungselement (3) zur Ankopplung einer auswechselbaren Ausrüstung als Arbeitsgerät (2) aufweist, **dadurch gekennzeichnet, dass** die Steuerung des Arbeitsprozesses der Arbeitsmaschine (47) wenigstens teilweise mikroprozessorgesteuert von einem Jobrechner (9) des angekoppelten Arbeitsgerätes (2) erfolgt.

2. Verfahren zur Steuerung mobiler landwirtschaftlicher Arbeitsmaschinen (47), welche aus einer Kombination eines Trägerfahrzeug (1) und mindestens einem Arbeitsgerät (2) als Teil einer auswechselbaren Ausrüstung besteht und das Trägerfahrzeug (1) zumindest ein als Jobrechner (4,44,44',44") ausgebildetes Steuerungselement und ein Terminal (5) zur Prozessbeobachtung und zur Prozesssteuerung aufnimmt, und das Trägerfahrzeug 1 mindestens ein Kopplungselement (3) zur Ankopplung einer auswechselbaren Ausrüstung als Arbeitsgerät (2) aufweist, **dadurch gekennzeichnet, dass** die Steuerung des Arbeitsprozesses der Arbeitsmaschine (47) von einem mikroprozessorgesteuerten ersten Jobrechner (9) und einem mikroprozessorgesteuerten zweiten Jobrechner (4) erfolgt und der erste Jobrechner (9) des angekoppelten Arbeitsgerätes (2) zumindest teilweise die Leitfunktion der Prozesssteuerung übernimmt.

3. Verfahren zur Steuerung mobiler landwirtschaftlicher Arbeitsmaschinen (47) nach Anspruch 1 oder 2, **dadurch gekennzeichnet, dass** die Software als Steuerungsprogramm zur Steuerung der landwirtschaftlicher Arbeitsmaschinen (47) in einem Speicher 45 des Arbeitsgerätes (2) dauerhaft gespeichert ist.

4. Verfahren zur Steuerung mobiler landwirtschaftlicher Arbeitsmaschinen (47) nach einem oder mehreren der vorhergehenden Ansprüche, **dadurch gekennzeichnet, dass** die steuerungstechnische Verbindung zwischen dem Jobrechner (9) des Arbeitsgerätes (2) und dem Jobrechner (4) des Trägerfahrzeugs (1) durch einen externen bidirektionalen BUS (12) erfolgt.

5. Verfahren zur Steuerung mobiler landwirtschaftlicher Arbeitsmaschinen (47) nach einem oder mehreren der vorhergehenden Ansprüche, **dadurch gekennzeichnet, dass** in der steuerungstechnische Verbindung zwischen dem Jobrechner (9) des Arbeitsgerätes (2) und dem Jobrechner (4) des Trägerfahrzeugs (1) ein Terminal (5) mit Bridge-Funktionalität integriert ist

6. Verfahren zur Steuerung mobiler landwirtschaftlicher Arbeitsmaschinen (47) nach einem oder mehreren der vorhergehenden Ansprüche, **dadurch gekennzeichnet, dass** wenigstens eine steuerungstechnische Verbindung zwischen dem Trägerfahrzeug (1) und dem Arbeitsgerät (2) durch einen externen bidirektionalen LBS oder ISO-BUS (12) gebildet wird.

7. Verfahren zur Steuerung mobiler landwirtschaftlicher Arbeitsmaschinen (47) nach einem oder mehreren der vorhergehenden Ansprüche, **gekennzeichnet**, dass der Jobrechner (9) des Arbeitsgerätes (2) Ausgangssignale generiert und diese Ausgangssignale direkt oder indirekt auf Steuerelemente (4,44,44',44",42) des Trägerfahrzeugs zugreifen und Prozessführungsgrößen des Trägerfahrzeugs (1) verändern kann.

8. Verfahren zur Steuerung mobiler landwirtschaftlicher Arbeitsmaschinen (47) nach einem oder mehreren der vorhergehenden Ansprüche, **dadurch gekennzeichnet, dass** die Steuerelemente der wenigstens eine Jobrechner (4,44,44',44") des Trägerfahrzeugs (1) und/oder Steuerventile (42) eines Hydraulikkreislaufs des Trägerfahrzeugs (1) sind.

9. Verfahren zur Steuerung mobiler landwirtschaftlicher Arbeitsmaschinen (47) nach einem oder mehreren der vorhergehenden Ansprüche, **dadurch gekennzeichnet, dass** die Bridge-Funktionalität Bestandteil eines Jobrechners ist.
